# EUROPÄISCHE PATENTSCHRIFT

(11) **EP 0 626 006 B1**
(45) Veröffentlichungstag und Bekanntmachung des Hinweises auf die Patenterteilung: **31.01.1996**
(21) Anmeldenummer: 93917387.8
(22) Anmeldetag: 04.02.1993
(51) Int. Cl.: C11D 11/00, C11D 11/02, B01D 1/18, F26B 21/04, C11D 11/04

(54) **VERBESSERTES VERFAHREN ZUR GEWINNUNG VON OBERFLÄCHENAKTIVEN ANIONTENSID-SALZEN DURCH SPRÜHNEUTRALISATION IN EINER HEISSGASPHASE**
IMPROVED PROCESS FOR PREPARING SURFACE ACTIVE ANIONIC TENSIDE SALTS BY SPRAY NEUTRALIZATION IN HOT GAS PHASE
PROCEDE AMELIORE DE PREPARATION DE SELS D'AGENTS DE SURFACE ANIONIQUES TENSIOACTIFS PAR NEUTRALISATION PAR PULVERISATION DANS UNE PHASE DE GAZ CHAUD

(30) Priorität: 12.02.1992 DE 4204090; 12.02.1992 DE 4204035; 27.02.1992 DE 4206050; 02.03.1992 DE 4206521; 02.03.1992 DE 4206495; 19.03.1992 DE 4208773; 24.03.1992 DE 4209434
(43) Veröffentlichungstag der Anmeldung: 30.11.1994
(73) Patentinhaber: Henkel Kommanditgesellschaft auf Aktien, D-40191 Düsseldorf (DE)
(72) Erfinder: RÄHSE, Wilfried, D-4000 Düsseldorf 13 (DE); FUES, Johann, D-4048 Grevenbroich 5 (DE)
(86) Internationale Anmeldenummer: EP9300262
(87) Internationale Veröffentlichungsnummer: WO9316164

(56) Entgegenhaltungen:
- EP-A- 0 319 819
- WO-A-92/05849

## Beschreibung

Die Erfindung betrifft ein in mehrfacher Weise verbessertes Verfahren zur Gewinnung von oberflächen- beziehungsweise grenzflächenaktiven wasserlöslichen, wasseremulgierbaren oder wasserdispergierbaren Aniontensid-Salzen, die beispielsweise als Wertstoffe in Netz-, Wasch- und/oder Reinigungsmitteln verwendet werden können. Aniontensid-Salze dieser Art werden im nachfolgenden der Einfachheithalber als waschaktive Aniontenside oder ganz einfach als Aniontenside bezeichnet.

Waschaktive Aniontenside sind wichtige Haupt- oder Mischungskomponenten in allen Einsatzgebieten, in denen grenzflächenaktive beziehungsweise oberflächenaktive Hilfsstoffe eingesetzt werden. In der Regel werden die Aniontenside in Abmischung mit weiteren Tensidtypen, insbesondere gemeinsam mit nichtionischen Tensiden, zum Einsatz gebracht.

Die Klasse der Aniontenside beschreibt bekanntlich Verbindungen, in denen hydrophobe Kohlenwasserstoffreste mit hydrophilen negativ-geladenen Gruppen verbunden sind, die ihrerseits zur Salzbildung befähigt sind. Die wichtigstens Vertreter der hydrophilen negativ-geladenen Gruppen sind Carboxylgruppen und/oder die Reste anorganischer Säuren, insbesondere der Schwefelsäure und/oder der Phosphorsäure. Die zugehörigen Aniontensid-Klassen sind bekanntlich die Carboxylate beziehungsweise Seifen, die Sulfate oder die Sulfonate, die Phosphate oder die Phosphonate. Im Rahmen der zahlreichen Einsatzgebiete für Aniontenside dieser Art kommt heute neben den Seifen insbesondere den Sulfonaten und den Sulfaten eine überragende Bedeutung zu. Für die Wirkung der Aniontenside im praktischen Einsatz spielt aber auch die Auswahl der jeweils optimalen Salz-bildenden Kationen eine entscheidende Rolle. In der Regel werden hier Vertreter gewünscht, die zu wasserlöslichen oder wenigstens hinreichend wasseremulgierbaren beziehungsweise wasserdispergierbaren Aniontensiden führen. Überragende Bedeutung kommt hier wiederum den Salzen der Alkalimetalle, insbesondere des Natriums und/oder Kaliums, den entsprechenden Ammoniumsalzen und/oder Salzen auf Basis organisch substituierter Ammoniumionen zu. Die Synthese der Aniontensid-Salze sieht dementsprechend - häufig als letzten Arbeits-schritt - die Neutralisation der noch saure Gruppierungen tragenden Aniontensid-Vorstufen mit den geeigneten Salz-bildenden anorganischen und/oder organischen Basen vor. Zum Einsatz kommen dabei häufig wäßrige Zubereitungsformen der Basen - beispielsweise wäßrige Natronlauge - die aufgrund ihres Wassergehaltes in das Reaktionsprodukt Wasser eintragen. Zusätzliches Wasser entsteht als Produkt der Salz-bildenden Neutralisationsreaktion. Zur Gewinnung trockener Anbietungsformen der Aniontensid-Salze ist also in der Regel eine nachgeschaltete Auftrocknung notwendig. Wäßrige Anteile im Aniontensid-Salz-Reaktionsprodukt können darüberhinaus weiterführenden Ursprungs sein. So ist häufig eine in wäßiger Phase durchgeführte Bleiche der primären Reaktionsprodukte aus den organischen Grundkomponenten und den zugehörigen, insbesondere anorganischen Säuren notwendig, um zu Tensiden hinreichender Hellfarbigkeit zu gelangen. Auf dem Gebiet der heute üblichen Aniontenside ist dementsprechend die intermediäre Herstellung wäßriger Konzentrate, die häufig als wäßrige Pasten vorliegen können, üblich.

Die Überführung solcher wäßrigen Zubereitungsformen der Aniontenside in pulverförmige oder granulatierte Trockenprodukte erfolgt in großtechnischem Maßstab durch Sprühtrocknung zu feinen Pulvern, die in einem getrennten oder auch in einem in die Trocknungsstufe integrierten nachfolgenden Verfahrensschritt zu größeren Agglomeraten agglomeriert werden können. Auf das allgemeine Fachwissen wird hier verwiesen.

Unter Benutzung dieser Trocknungstechnologie sieht ein eleganter Lösungsvorschlag für die bei der Aniontensid-Synthese in letzter Stufe erforderliche Salzbildung das Arbeitsprinzip der sogenannten Sprühneutralisation vor EP-A-0 319 819. Hier können die zwei Arbeitsschritte der Neutralisation unter Einsatz insbesondere wasserhaltiger Reaktanden sowohl auf der Seite der Aniontensid-Vorstufen als der die Kationen liefernden Basenkomponenten mit der nachfolgenden Trocknung der gebildeten Aniontensid-Salze zu einem Arbeitsschritt verbunden werden. Die miteinander zur Reaktion zu bringenden Komponenten werden versprüht und in diesem Zustand miteinander vermischt. Das anfallende Gut kann einer üblichen mit Heißgas erfüllten Sprühtrocknungszone zugeführt werden, so daß letztlich in einem integralen Arbeitsschritt die Salz-bildende Neutralisationsreaktion sowie die Abführung des als Hilfsmedium eingesetzten Wasseranteils und des durch die Neutralisationreaktion gebildeten Wasseranteils möglich werden.

Die Sprühtrocknung wäßriger Zubereitungen von Wertstoffen der genannten Art, die in großem Umfange beispielsweise als Bestandteil in Textilwaschmitteln Verwendung finden, wird seit Jahrzehnten in großtechnischem Maßstab durchgeführt. Als Trocknungsgasstrom werden Heißluft beziehungsweise Gemische von Luft und heißen Verbrennungsabgasen eingesetzt. Textilwaschpulver beziehungsweise Wertstoffe und/oder Wertstoffgemische zur Herstellung von Textilwaschmitteln in schütt- und rieselfähiger Pulverform werden in entsprechenden Sprühtürmen in der Regel im Bereich des Umgebungsdrucks in Gleichstrom- oder häufiger in Gegenstromfahrweise gewonnen. Im gleichen Medium wird bisher die erfindungsgemäß insbesondere betroffene Stufe der Sprühneutralisation vorgenommen.

Die Anmelderin beschreibt in ihrer älteren Anmeldung DE-A 40 30 688 erstmalig den Einsatz von überhitztem Wasserdampf als trocknenden Heißgasstrom bei der Gewinnung von pulverförmigen und gegebenenfalls agglomerierten Wertstoffen beziehungsweise Wertstoffgemischen für Netz-, Wasch- und/oder Reinigungsmittel aus ihren wäßrigen Zubereitungen. Herausgestellt ist dabei insbesondere auch die entsprechende Trocknung von waschaktiven Aniontensid-Salzen mittels Heißdampf. In einer Reihe weiterer Anmeldungen wird diese neuartige Technologie der Heißdampftrocknung für Komponenten aus dem Gebiet der Netz-, Wasch- und/oder Reinigungsmittel weiterentwickelt und optimiert. Verwiesen wird auf die älteren deutschen Patentanmeldungen P 42 04 035.3, P 42 04 090.6, P 42 06 050.8, P 42 06 521.6 sowie P 42 06 495.3. Der Offenbarungsgehalt aller dieser genannten älteren Schutzrechte beziehungsweise Schutzrechtsanmeldungen der Anmelderin wird hiermit ausdrücklich auch zum Gegenstand der erfindungsgemäßen Offenbarung gemacht.

Die im nachfolgenden geschilderte Lehre der Erfindung baut auf den Erkenntnissen der Anmelderin zur Trocknung von Wertstoffen und Wertstoffgemischen der hier betroffenen Art mit überhitztem Wasserdampf als Trocknungsgas auf, geht dabei aber einen entscheidenden Schritt weiter, auf den es nach Wissen der Anmelderin in der einschlägigen Literatur bisher keinerlei Hinweis gibt. Der Kern dieser erfindungsgemäßen Weiterentwicklung liegt in dem folgenden: Die Inertbedingungen einer mit überhitztem Wasserdampf erfüllten Trocknungszone sollen jetzt auch schon für die abschließende Verfahrensstufe bei der Gewinnung der Aniontensid-Salze ausgenutzt werden. Die Erfindung will insbesondere die Umsetzung der noch saure Gruppierungen enthaltenden Aniontensid-Vorprodukte mit den Salz-bildenden insbesondere wäßrigen Basen anorganischer und/oder organischer Natur bereits im Schutze der Inertbedingungen der mit überhitztem Wasserdampf erfüllten Zone durchführen. Dem Medium des überhitzten Wasserdampfes wird damit eine weiterführende Funktion zugeordnet: Der überhitzte Wasserdampf wird inertisierendes Reaktionsmedium für die Neutralisationsreaktion. Seine Eignung als Transportmedium für den Trocknungsprozeß wird dadurch nicht beeinträchtigt.

### Gegenstand der Erfindung

Gegenstand der Erfindung ist dementsprechend in einer ersten Ausführungsform ein Verfahren zur Herstellung netz-, wasch- und/oder reinigungsaktiver Aniontensid-Salze durch Umsetzung anorganischer und/oder organischer Basen mit den zugehörigen Aniontensid-Vorstufen, die hydrophile negativ-geladene Gruppen an hydrophobe Kohlenwasserstoffreste gebunden enthalten, im Rahmen einer Sprühneutralisation, bei der die Aniontensid-Vorstufen in einer versprühbaren Zubereitungsform feinteilig in eine Gasphase versprüht, dabei mit den Basen zur Umsetzung gebracht und bevorzugt wenigstens anteilig getrocknet werden. Das erfindungsgemäße Verfahren ist dadurch gekennzeichnet, daß die Sprühneutralisation in überhitztem Wasserdampf als Schutzgasphase durchgeführt wird.

In einer anderen Ausführungsform ist Gegenstand der Erfindung die Verwendung von überhitztem Wasserdampf als Schutzgas und gleichzeitig als wasserabführendes Trocknungsgas bei der Herstellung von Aniontensid-Salzen der zuvor geschilderten Art durch Umsetzung der Aniontensid-Vorstufen mit anorganischen und/oder organischen Basen.

In einer Abwandlung des zuvor geschilderten Verfahrens kann die Neutralisationsreaktion der Basen mit den zugehörigen Aniontensid-Vorstufen zunächst in Abwesenheit des überhitzten Wasserdampfes durchgeführt werden, woraufhin das so erhaltene Reaktionsgemisch unter Verwertung der gebildeten Neutralisationswärme der Trocknung mit überhitztem Wasserdampf zugeführt wird.

### Einzelheiten zur Erfindung

Wie bereits ausgeführt, verbindet die erfindungsgemäße Lehre in sinnvoller Weise die Arbeitsstufe der Salzbildung im Rahmen der Aniontensid-Synthese mit der Möglichkeit, daß dabei anfallende Aniontensid unmittelbar zum im wesentlichen wasserfreien Trockenprodukt umzuwandeln. Die Nutzung der Gasphase des überhitzten Wasserdampfes als Reaktionsraum für die Neutralisationsreaktion führt dabei nicht etwa nur zu einer Verfahrensvereinfachung. Entscheidend ist, daß eine Mehrzahl weiterer Vorteile für den Ablauf des Verfahrens und für die Eigenschaften des letztlich zu erhaltenden Verfahrensproduktes zugänglich werden.

Bei der Sprühneutralisation nach dem Verfahren des Standes der Technik werden fließfähige, üblicherweise wäßrige Zubereitungen einerseits der noch negativ-geladene hydrophile Gruppen enthaltenden Tensidvorprodukte und andererseits der die gewünschten Kationen bildenden Basen fein versprüht, in diesem Zustand innig miteinander vermischt und damit zur Reaktion gebracht. Das Versprühen kann beispielsweise mittels Mehrstoffdüsen oder durch separat angeordnete Düsen für die jeweiligen Produktströme erfolgen. Der Zustand der Vermischung und Durchwirbelung wird in der Regel durch zusätzliches Einspeisen von Luft unterstützt. Die Neutralisationsreaktion liefert bekanntlich als exotherme Reaktion im Reaktionsgemisch den äquivalenten Betrag der Neutralisationswärme, der schon von sich aus zu einer Aufheizung der Feinsttröpfchen führt. Die nach dem Verfahren des Standes der Technik nicht auszuschließende Gegenwart von Luft und damit Sauerstoff bringt mehrfache Gefährdungen des Verfahrens mit sich: Einerseits besteht die im großtechnischen Verfahren für die Sprühtrocknung organischer Materialien der hier betroffenen Art stets gegebene Gefahr unerwünschter Entzündungen, die bis zur Explosionsgefährdung reichen kann. Zum anderen kann sich die Gegenwart von Luftsauerstoff, aber auch die Gegenwart von Kohlendioxid, als Bestandteil heißer Verbrennungsgase nachteilig auf die Produktbeschaffenheit der Aniontensid-Salze auswirken.

Den zuvor genannten älteren Schutzrechten und Schutzrechtsanmeldungen der Anmelderin auf dem Gebiet der Trocknung von Wertstoffen und Wertstoffgemischen der hier betroffenen Art liegt die Erkenntnis zugrunde, daß der zuverlässige Ausschluß von Luft und heißen Verbrennungsgasen durch deren Ersatz mittels des überhitzten Heißdampfes zu einer sicheren Inertisierung sowohl bezüglich der unerwünschten Brand- beziehungsweise Ex-Gefahr als auch bezüglich der Produktbeschaffenheit führt. Darüber hinaus ist in den älteren Anmeldungen geschildert, daß das in der Atmosphäre des überhitzten Wasserdampfes als Trocknungsgas aufgetrocknete Feststoffgut gegenüber dem konventionell aufgetrockneten vergleichbaren Material wichtige anwendungstechnische Vorteile besitzt, die sich beispielsweise in der erleichterten und verbesserten Auflösbarkeit des Wasserdampf-getrockneten Materials zeigen. Im einzelnen kann auch hier auf die Offenbarung der genannten älteren Schutzrechte der Anmelderin verwiesen werden.

Die Erfindung macht von diesen Vorteilen Gebrauch und erleichtert damit zusätzlich die Reaktionsstufe der Salzbildung. Bedenkenlos kann jetzt in dieser Arbeitsstufe mit vergleichsweise hohen Konzentrationen der versprühten organischen Reaktandenphase gearbeitet werden. Die Gefahr einer unbeabsichtigten und unerwünschten Entzündung ist gebannt. Die schnell ablaufende Neutralisationsreaktion liefert auch unter den erfindungsgemäßen Arbeitsbedingungen die zugehörige Neutralisationswärme im Reaktionsgut, wodurch die Verdampfung des eingetragenen Wasseranteiles und des durch Neutralisation gebildeten Wasseranteiles zusätzlich gefördert wird. Der Trocknungsvorgang als gedanklich zweiter Schritt im erfindungsgemäßen Verfahren wird hierdurch zusätzlich begünstigt.

In der bereits erwähnten Abwandlung des erfindungsgemäßen Verfahrens können die Arbeitsschritte der Neutralisation und der Trocknung mit überhitztem Wasserdampf unter Ausnutzung der Neutralisationswärme auch wie folgt miteinander verbunden werden: Es wird zunächst die Neutralisation der Aniontensid-Vorstufe(n) mit den jeweils ausgewählten Basen in Abwesenheit von überhitztem Wasserdampf durchgeführt. Zweckmäßigerweise wird dabei mit hinreichend fließfähigen Phasen wenigstens in einem der hier eingesetzten Reaktanden gearbeitet, so daß als Ergebnis eine fließfähige und beispielsweise versprühbare Zubereitungsform der Aniontensid-Salze in der Hilfsflüssigkeit anfällt. Als Hilfsflüssigkeit wird in der Regel insbesondere Wasser verwendet werden. Anschließend wird unter möglichst optimaler Ausnutzung der durch Salzbildung entstandenen Neutralisationswärme das fließfähige Material der Trocknungsstufe mit dem überhitzten Wasserdampf zugeführt. In der bevorzugten Ausführungsform werden dementsprechend die beiden Verfahrensschritte so miteinander verbunden, daß die Neutralisation und die nachfolgende Trocknung mit überhitztem Wasserdampf unmittelbar aneinander anschließende Verfahrensschritte sind. In einfacher Form kann eine solche Sequenz von Verfahrensschritten im kontinuierlichen Verfahren durchgeführt werden, in dem beispielsweise die Neutralisation in einem Reaktionsrohr erfolgt, dem die miteinander umzusetzenden Reaktandenströme zugeführt werden. Der Ausfluß dieses Reaktionsrohres wird dann unmittelbar der nachfolgenden Stufe der Trocknung unter Einsatz von überhitztem Wasserdampf zugeführt.

Das erfindungsgemäße Verfahren eignet sich zur Anwendung bei der Herstellung aller heute üblichen Aniontensid-Salze, wie sie aus der Praxis und Literatur bekannt und beschrieben sind. Auf dieses allgemeine Wissen des Fachmanns wird ausdrücklich verwiesen. Die aus heutiger Sicht wichtigsten Stoffklassen für grenzflächenaktive Aniontensid-Salze umfassen insbesondere entsprechende Carboxylate, Sulfate, Sulfonate, Phosphate und/oder Phosphonate. Die Carboxylate können natürlichen und/oder synthetischen Ursprungs sein. Carboxylate natürlichen Ursprungs sind beispielsweise die entsprechenden Fettsäureseifen.

Wichtige Aniontensid-Salze bauen auf Sulfonierungs- und/oder Sulfatierungsprodukten oleophiler Grundkörper auf, wobei hier bekanntlich gesättigte und/oder ungesättigte, geradkettige und/oder verzweigte aliphatische und/oder cykloaliphatische beziehungsweise entsprechende aromatische Reste enthaltende Grundkörper Ausgangsmaterial für die Einführung von Resten der Schwefelsäure sind. Dabei kann dieser Schwefelsäurerest unmittelbar an die Kohlenstoffkette gebunden sein, die Anbindung kann aber auch über Zwischenatome, insbesondere über Sauerstoff erfolgt sein. Das Ergebnis einer solchen Derivatisierung oleophiler Grundkörper mit Schwefelsäureresten sind die bekannten Sulfonate beziehungsweise Sulfate. Entsprechende Derivatisierungen sind auf dem Gebiet der Aniontenside insbesondere aber auch mit mehrbasischen Säuren des Phosphors möglich und bekannt.

Die jeweils zur Salzbildung im erfindungsgemäßen Sinne befähigten freien Säurefunktionen sind in den in der Praxis zum Einsatz kommenden Aniontensid-Salzen insbesondere mit Kationen aus der Gruppe der Alkalimetallehier insbesondere Natrium und/oder Kalium - der Erdalkalimetalle - hier insbesondere Calcium und/oder Magnesium -, mit dem Ammoniumion beziehungsweise Ammoniak und/oder mit Kationen organischer Ammoniumverbindungen umgesetzt. Die durch die Lehre der Erfindung umfassten Möglichkeiten und Stoffklassen erfassen beliebige Vertreter dieses Bereiches.

Die hydrophoben Kohlenwasserstoffreste von Aniontensiden der Praxis enthalten häufig etwa 6 bis 30 und vorzugsweise etwa 8 bis 20 C-Atome, wobei - je nach beabsichtigtem Anwendungszweck - in an sich bekannter Weise durch Verschiebung und Einstellung der im Aniontensid sich ausbildenden HLB-Werte und des sich damit einstellenden Gleichgewichtszustandes zwischen oleophilen und hydrophilen Eigenschaften Optimierungen vorgenommen werden können. So können für Wasch- und Reinigungszwecke hydrophobe Reste mit mehr als 10 C-Atomen, insbesondere mit 12 bis 18 C-Atomen, besonders wichtige Vertreter sein, während auf dem Gebiet kosmetischer Formulierungen eher hydrophobe Reste mit etwas geringerer Kohlenstoffzahl beispielsweise mit etwa 6 bis 12 C-Atomen und insbesondere mit etwa 8 bis 10 C-Atomen häufig bevorzugt werden. Im einzelnen kann auf das generelle Fachwissen verwiesen werden, das der umfangreichen Fach- und Patentliteratur der hier betroffenen Stoffklassen zugrundeliegt.

Im erfindungsgemäßen Verfahren werden die Salz-bildenden Aniontensid Vorstufen bevorzugt als fließfähige und versprühbare Lösungen, Emulsionen und/oder Suspensionen eingesetzt. Besonders geeignet sind entsprechende wäßrige Zubereitungsformen, die der Sprühneutralisationsstufe zugeführt und dort durch geeignete Vorrichtungen - beispielsweise durch Düsenzerstäubung und/oder durch Scheibenzerstäubung - fein verteilt werden. Auch die anorganischen und/oder organischen Basen werden vorzugsweise in fließfähiger Form dem mit überhitztem Wasserdampf erfüllten Reaktionsraum zugeführt. Auch hier sind insbesondere wäßrige Zubereitungsformen geeignet. So können beispielsweise wäßrige Lösungen von Alkalihydroxiden, insbesondere Natriumhydroxid, eingesetzt werden. Die entsprechenden Reaktanden auf Basis von Erdalkalimetallen können beispielsweise in Form fließfähiger Suspensionen der Hydroxide von insbesondere Calcium und/oder Magnesium Verwendung finden.

In geeigneter Form werden die Produktströme in dem mit überhitztem Wasserdampf erfüllten Reaktionsraum fein versprüht und darin innig vermischt. Als Reaktionsraum eignet sich beispielsweise ein Sprühturm im Sinne der Lehre der älteren eingangs genannten Schutzrechte und Schutzrechtsanmeldungen der Anmelderin zur Wertstofftrocknung unter Einsatz überhitzten Wasserdampfs als Trocknungsgas. Das erfindungsgemäße Verfahren ist allerdings auf eine solche Ausgestaltung des primären Reaktionsraumes nicht eingeschränkt. Wesentlich ist ja lediglich für den ersten Teilschritt der Neutralisationsreaktion die hinreichende Vermischung der feinteilig zugeführten Reaktandenströme in dem umgebenden Schutzraum, der mit überhitztem Wasserdampf erfüllt ist. Da in der Zusammenfassung der Sprühneutralisation und der nachfolgenden Trocknung eine besonders einfache Ausgestaltung des erfindungsgemäßen Verfahrens liegt, wird im nachfolgenden - unter Bezugnahme auf die Offenbarung der genannten älteren Schutzrechte der Anmelderin - die konkrete Verfahrensdurchführung unter den Bedingungen der Trocknung wäßriger Aniontensid-Materialien mit überhitztem Heißdampf geschildert.

Die Erfindung betrifft damit insbesondere ein Verfahren zur Behandlung der wasserhaltigen Wertstoffe oder Wertstoffgemische unter Einsatz von überhitztem Wasserdampf als Trocknungsgas, das im Kreislauf durch die Reaktions- und Trocknungszone geführt und dann nach Ausschleusen des verdampften Wasseranteils im Kreislauf in diese Reaktions- beziehungsweise Trocknungsstufe zurückgeführt wird. Dabei sieht die erfindungsgemäße Lehre in einer bevorzugten Ausführungsform vor, daß der für die Wasserverdampfung zusätzlich benötigte Energiebetrag, der über die Neutralisationswärme hinaus dem Verfahrenskreislauf zugeführt werden muß, wenigstens weitaus überwiegend, bevorzugt ausschließlich, durch indirekten Wärmeaustausch zugeführt wird. Es kann dabei weiterhin bevorzugt sein, mit Innendrucken des dampferfüllten Systems im Bereich des Normaldrucks zu arbeiten, wobei zweckmäßigerweise aber in einer wichtigen Ausführungsform derart angehobene Drucke im Kreislaufsystem eingestellt werden, daß - beispielsweise an Schadstellen, wie sie in großtechnischen Anlagen niemals völlig auszuschließen sind - Lufteinbrüche in das dampferfüllte Kreislaufsystem mit Sicherheit verhindert werden können.

In einer weiteren, im allgemeinen allerdings weniger bevorzugten Ausführungsform, wird der für die Wasserverdampfung zusätzlich benötigte Energiebetrag dem Dampfkreislaufstrom wenigstens anteilsweise durch Direktbeheizung mit Verbrennungswärme zugeführt.

Wie bereits angegeben, kann auch unter den erfindungsgemäßen Reaktions-und Arbeitsbedingungen die Behandlung mit dem überhitzten Wasserdampf einerseits als Sprühtrocknung und/oder andererseits aber auch als Trocknung in Wirbelschicht vorgenommen werden. Vergleichsweise hoch wasserhaltige Einsatzmaterialien werden beispielsweise der bekannten Technolgie der Sprühtrocknung unterworfen. Die Sprühtrocknung kann in entsprechend ausgerüsteten Türmen in Gleichstrom- oder in Gegenstromfahrweise vorgenommen werden.

Beim Arbeiten unter den Bedingungen der Sprühtrocknung ist es bevorzugt, den indirekten Energieeintrag zur Zuführung der Verdampfungsenergie in den Dampfkreislauf wenigstens überwiegend außerhalb der Trocknungszone vorzunehmen. Auf diese Weise wird sichergestellt, das fließfähige nasse Einsatzmaterial in feiner Partikelform ohne nennenswertes Verkleben der Partikel miteinander oder wenigstens unter einer steuerbaren Einstellung der Partikelgröße aufzutrocknen. Der außerhalb der Sprühtrocknungszone am Dampfkreislauf vorgenommene Energieeintrag kann in jeder bekannten beliebigen Form der indirekten Wärmeübertragung vorgenommen werden. Als Beispiel sei die Verwendung von Rohrbündelsystemen erwähnt, die einerseits von Heizgasen beliebigen Ursprungs und andererseits - aber getrennt von diesen Heizgasen - von dem aufzuheizenden Wasserdampfstrom durchströmt werden.

In einer besonders wichtigen Ausführungsform der Erfindung wird dieser indirekte Energieeintrag in den Dampfkreislaufstrom mittels eines oder mehrerer integrierter Brenner mit indirekter Wärmeübertragung auf den Dampfstrom vorgenommen, wobei Brenner-seitig die heißen Verbrennungsgase unmittelbar in den Wärmeaustauscher eingeleitet werden, der in den Dampfkreislaufstrom integriert ist. Die Temperatur der Verbrennungsgase kann dabei beispielsweise im Bereich von etwa 400 bis 1.000°C und insbesondere im Temperaturbereich von etwa 650 bis 960°C liegen. Zur optimalen Wärmeausnutzung und damit zur Kostensenkung des Gesamtverfahrens kann es zweckmäßig sein, eine anteilige, bevorzugt möglichst weitgehende Kreislaufführung auch der Rauchgase vorzusehen. So können beispielsweise wenigstens 30 Vol.-% und vorzugsweise mehr als 40 Vol.-% der heißen Rauchgase nach dem Verlassen des integrierten Wärmeaustauschers im Kreislauf zur weiteren Energieverwertung wieder zurückgeführt werden. Vorzugsweise liegt die Menge der Rauchgaskreislaufführung bei mehr als 60 Vol.-% und dabei häufig im Bereich von etwa 70 Vol.-% der zugeführten Verbrennungsgase. Zum Betrieb des Brenners sind alle üblichen Brenngase, insbesondere Erdgas oder vergleichbare niedere Kohlenwasserstoffe beziehungsweise Kohlenwasserstoffgemische und/oder Wasserstoff geeignet.

Wird andererseits das erfindungsgemäße Trocknungsprinzip im Rahmen einer Wirbelschichttrocknung eingesetzt, so kann hier die erforderliche Aufheizung des Trocknungsgases auf Dampfbasis sowohl außerhalb der Trocknungszone als auch mit Wärmeaustauscherelementen bewirkt werden, die in das Wirbelbett integriert sind. Dabei können auch diese beiden Mechanismen der Gasaufheizung miteinander verbunden werden.

Das erfindungsgemäß bevorzugte Arbeiten im Bereich des Normaldrucks ermöglicht den vergleichsweise komplikationslosen Betrieb auch in großtechnischen Anlagen mit den geforderten hohen Stoffdurchsätzen pro Zeiteinheit. Die erfindungsgemäß bevorzugte Maßnahme des leicht angehobenen Innendrucks verhindert zuverlässig das unerwünschte Einbrechen von Fremdgas, insbesondere von Luft, in das mit Wasserdampf erfüllte Kreislaufsystem. Sekundärschädigungen der angestrebten hochwertigen Produktbeschaffenheit können damit zuverlässig ausgeschlossen werden. Geeignete Arbeitsdrucke liegen beispielsweise im Bereich bis etwa 150 mbar, zweckmäßig bis etwa 75 mbar und vorzugsweise unterhalb 50 mbar Überdruck. Der Bereich von etwa 5 bis 15 mbar Überdruck kann besonders bevorzugt sein. Die Trocknung mit überhitztem Wasserdampf im Sinne der erfindungsgemäßen Lehre ist prinzipiell natürlich auch bei Unterdrucken, insbesondere im Bereich mäßiger Unterdrucke, möglich, erfordert dann aber einen erhöhten technischen Aufwand zur Sicherstellung des Ausschlusses möglicher Schadstellen im Kreislaufsystem, durch die unerwünschte Lufteinbrüche ausgelöst würden.

Zur Durchführung des erfindungsgemäßen Verfahrens gelten im übrigen weitgehend die Angaben der eingangs genannten DE-A 40 30 688 der Anmelderin zur Trocknung der hier betroffenen Wertstoffgemische mit überhitztem Wasserdampf als Trocknungsgas. Zur Vervollständigung der Erfindungsoffenbarung werden diese Angaben hier - soweit erforderlich - auszugsweise wiederholt:

In der älteren Anmeldung ist als wesentlicher Gedanke zum Verständnis der Lehre des Trocknens von Wirkstoffgemischen der hier betroffenen Art mittels Heißdampf die Möglichkeit zum Verzicht auf die Einstellung optimaler Trocknungsergebnisse durch Heißdampfeinwirkung im Verfahrensendprodukt gesehen. Grundsätzlich gilt das auch im Rahmen der erfindungsgemäßen Lehre. Es hat sich allerdings gezeigt, daß beim zuverlässigen Ausschluß von Störfaktoren wie Rauchgasen und Luft beziehungsweise Sauerstoff auch solche Stoffgemische vergleichsweise temperaturunempfindlich sind, die unter den konventionellen Trocknungsbedingungen mit Heißgasen schneller zu unerwünschten Fremdreaktionen - beispielsweise Verfärbung, Verkrustung und dergleichen - neigen. Für den Einsatz der Heißdampftrocknung bedeutet das, daß ein sicheres Arbeiten sowohl mit Heißdampf in vergleichsweise hohen Temperaturbereichen als auch Auftrocknungsgrade bis auf sehr geringe Restfeuchtewerte ohne negative Beeinträchtigung der Stoffbeschaffenheit möglich sind. So können Restfeuchten deutlich unter 1 Gew.-%, beispielsweise im Bereich bis etwa 0,5 Gew.-% oder sogar noch darunter, im Trockengut eingestellt werden. Gleichzeitig kann mit Arbeitstemperaturen des aus der Trocknungszone austretenden verbrauchten Dampfes oberhalb 100 bis 110°C, vorzugsweise oberhalb 150°C und insbesondere oberhalb 180°C, gearbeitet werden. Gleichwohl gilt, daß auch Restfeuchten gegebenenfalls beträchtlichen Ausmaßes toleriert werden können, wenn in der Zusammensetzung des Gutes sichergestellt ist, daß durch eine Art "Innerer Trocknung" eine soweitgehende Bindung dieses Restwassers stattfindet, daß die lagerbeständige Schütt- und Rieselfähigkeit des Trokkengutes gewährleistet ist.

Fällt durch Auslegung der jeweils gewählten Trocknungsanlage als primäres Verfahrensprodukt der Sprühneutralisation und nachfolgenden Auftrocknung Feinpulver an, so kann es für die Weiterverwertung der Aniontensid-Salze, beispielsweise aus verfahrenstechnischen Gründen, erwünscht sein, die Pulver in grobkörnigeres Gut umzuwandeln. Hierzu stehen die zahlreichen aus dem einschlägigen technischen Wissen bekannten Möglichkeiten zur Verfügung. Der Umwandlung des Pulvers zum agglomerierten Korn kann in einem separaten nachgeschalteten zweiten Verfahrensschritt beispielsweise durch Pulvergranulatoren vorgenommen werden, die als reine separate Formgebungsverfahren anzusprechen sind.

Besonders interessant ist allerdings der Einsatz solcher Verfahrenstypen, die in einem integrierten Verfahrenszuge die Ausbildung eines vergleichsweise grobkörnigen Gutes ermöglichen. Auch hier kennt die einschlägige Trocknungstechnologie unterschiedliche Ausführungsformen, verwiesen sei auf die Sprühtrocknung mit integrierter Agglomeration oder die Technologie der Wirbelschichtsprühgranulation. Die beiden Verfahrenstypen unterscheiden sich vor allem durch die Produktform, die im Prozeß erzeugt wird: Die Sprühtrocknung mit integrierter Wirbelschicht erzeugt durch das Verkleben der bei der Sprühtrocknung entstehenden Primärkörper regellos geformte Agglomerate, üblicherweise in der Größenordnung von etwa 0,3 bis 1,5 mm; die im Wirbelschichtssprühgranulations-Verfahren erzeugten kompakten Aufbauagglomerate können Größen bis beispielsweise 30 mm erreichen. Sie zeichnen sich noch dazu schon unter konventionellen Arbeitsbedingungen durch eine sehr feine Porenstruktur aus. Die Erfindung sieht in der hier angesprochenen Ausführungsform insbesondere vor, auch diese Partikelagglomeration unter dem Einfluß des überhitzten Wasserdampfs als Gasphase vorzunehmen. Hierdurch wird die Porigkeit auch gerade der Agglomerate nochmals weiter verbessert, vgl. dazu die einschlägigen Aussagen in den genannten älteren Schutzrechten der Anmelderin auf dem hier betroffenen Sachgebiet. Verwiesen wird im Zusammenhang mit einer solchen kombinierten Sprühtrocknung und Sprühagglomeration/Sprühgranulation neben dem allgemeinen Fachwissen insbesondere auf die Veröffentlichung D. Gehrmann "Entwicklungstendenzen der Trocknungstechnik in der chemischen Industrie", Chem.-Ing.-Tech. 62 (1990) Nr. 10, A 512 bis A 520, insbesondere das Unterkapitel 2.1 und die dort im einzelnen dargestellten Technologien.

Die Lehre der vorliegenden Erfindung umfaßt weiterhin die Elemente, die Gegenstand der bereits erwähnten älteren deutschen Patentanmeldung P 42 06 050.8 sind. Gegenstand dieses älteren Schutzrechtes sind bekanntlich staubarme Aniontensid-Konzentrate in Pulver- beziehungsweise Granulatform mit verbessertem Auflösevermögen in wäßrigen Medien. Die Lehre der vorliegenden Erfindung erweitert den Offenbarungsgehalt dieser älteren Anweisung in Richtung auf die Vorstufe der Durchführung der Sprühneutralisation bei der AniontensidBildung in dem überhitzten Wasserdampf als Schutzgas.

Die in dieser älteren Anmeldung P 42 06 050.8 geschilderten Elemente können auch im Rahmen der vorliegenden Lehre mitverwendet werden. Noch einmal wird darauf verwiesen, daß der Offenbarungsgehalt gerade auch dieser älteren Anmeldung zum Gegenstand auch der vorliegenden Erfindungsoffenbarung gemacht ist. Im nachfolgenden werden besonders charakteristische Elemente beziehungsweise Arbeitsanweisungen aus dieser älteren Anmeldung damit auch hier noch einmal angeführt.

In einer bevorzugten Ausführungsform liegt der Gehalt der erfindungsgemäß hergestellten Aniontensid-Konzentrate an wasch- oder reinigungsaktiven Aniontensiden bei wenigstens etwa 20 Gew.-% und vorzugsweise bei wenigstens etwa 30 Gew.-% - Gew.-% bezogen jeweils auf feinkörniges Feststoffgut. Grundsätzlich kann der Tensidfeststoff als solcher das Pulver- beziehungsweise Granulatkorn bilden. Dabei ist allerdings in der Praxis zu berücksichtigen, daß aus der Herstellung der Aniontenside im großtechnischen Maßstab in der Regel beschränkte Mengen an Restkomponenten - anorganische Salze, nicht-sulfierte Restanteile und dergleichen - als in der Praxis akzeptable beziehungsweise irrelevante Verunreinigung im Tensidfeststoff vorliegen. Erfindungsgemäß sind dementsprechend Tensidgranulate besonders bevorzugt, deren Aktivgehalt an Aniontensiden im Bereich von etw 35 bis 95 Gew.-% liegt. Innerhalb dieses Bereiches können wieder solche Stoffe beziehungsweise Stoffgemische bevorzugt sein, in denen die Tensidkomponenten mehr als 50 Gew.-% ausmachen - Gew.-% wie zuvor auf feinkörniges Feststoffgut bezogen.

Die in diesen Feststoffen vorliegenden anionischen Tensidkomponenten können dabei bestimmte individuelle Wertstoffe der genannten Art sein, ebenso können aber praktisch beliebige Abmischungen von Wertstoffen der hier angesprochenen Tensidklasse vorliegen. Der Begriff des "Tensidgemisches" ist dabei in mehrfacher Weise zu verstehen: Schon innerhalb einer ausgewählten Klasse - beispielsweise der Fettalkoholsulfate und/oder Fettsäuresulfonate liegt in der Regel kein individualisierter Stoff im Sinne einer ausgewählten Verbindung vor. Die Verarbeitung der Einsatzstoffe pflanzlichen und/oder tierischen Ursprungs aber auch die Verarbeitung entsprechender synthetischer Ausgangschemikalien führt zu Wertstoffen der betroffenen Art einer gewissen Bandbreite in der Zusammensetzung - beispielsweise bezüglich der C-Zahl in den Fettalkohol- und/oder Fettsäureresten.

Der Begriff der Tensidgemische beinhaltet insbesondere aber im Sinne der erfindungsgemäßen Definition auch die gezielte Vereinigung von Aniontensiden grundsätzlich unterschiedlicher Struktur. So kann es beispielsweise zweckmäßig sein, die klassischen waschaktiven Aniontenside auf TAS-Basis mit aniontensidischen Dispergatoren zu verschneiden, die beispielsweise auf Basis vergleichsweise kürzerkettiger Sulfate und/oder Sulfonate aufgebaut sein können. Andere Beispiele für wenigstens zwei unterschiedliche Aniontensidtypen sind Abmischungen von einerseits Di-Salzen - d.h. alpha-Sulfofettsäuresalzen, beispielsweise der Kettenlänge von C₁₄₋₂₀, sowie andererseits Aniontensiden auf TAS-Basis und/oder auf Basis von Alkylestersulfonaten, insbesondere MES.

Zur Lösung der Teilaufgabe staubfreie Pulver und/oder Granulate zur Verfügung zu stellen, sieht die Erfindung zwei Lösungsvorschläge vor, die auch miteinander in Kombination eingesetzt werden können. Der eine Ansatz geht dabei von dem Vorschlag aus, gezielten Gebrauch von dem Restwassergehalt des zu trocknenden Gutes zu machen. Je nach der Beschaffenheit des im Einzelfall vorliegenden Feststoffgutes kann durch Regelung des Restwassers im Trockengut eine Staubfreiheit wenigstens weitgehend zugänglich werden.

In einer wichtigen Ausführungsform sieht die Lehre der Erfindung allerdings vor, daß die Aniontensidkonzentrate Zusatzkomponenten in wechselnden Mengen enthalten können, die primär im erfindungsgemäßen Sinne der Beseitigung der Staubbildung beziehungsweise als staubbindende Hilfsmittel anzusehen sind. Dabei umfaßt die Erfindung hier jedoch ausdrücklich die Einarbeitung solcher Hilfsstoffe, die ihrerseits Wertstoffe im Sinne des Einsatzes in Wasch- und/oder Reinigungsmitteln beziehungsweise des gemeinsamen Einsatzes mit den jeweils betroffenen Aniontensidkomponenten darstellen.

In dieser Ausführungsform kennzeichnen sich die feinpartikulären schütt-und rieselfähigen Aniontensidkonzentrate der Erfindung dadurch, daß sie als staubbindende Hilfs- und/oder Wertstoffe Mischungskomponenten in bevorzugt homogener Abmischung enthalten, die bei Raumtemperatur - gegebenenfalls in Gegenwart beschränkter Restwassermengen - flüssige und/oder wenigstens klebrige Beschaffenheit besitzen und dabei bevorzugt in solchen Mengen in das Tensidkonzentrat eingearbeitet sind, daß die geforderte Staubfreiheit gewährleistet ist, ohne die Schütt- und Rieselfähigkeit nachhaltig zu behindern.

Geeignete staubbindende Hilfsstoffe können insbesondere bei Raumtemperatur wasserlösliche, wasseremulgierbare und/oder wasserquellbare Mischungskomponenten sein, die ihrerseits Monomerverbindungen, Oligomerverbindungen und/oder geeignet ausgesuchte Polymerverbindungen sind. Bevor auf charakteristische Beispiele für solche Hilfs- beziehungsweise Wertstoffe als Mischungskomponenten eingegangen wird, sei das der erfindungsgemäßen Lehre hier zugrundeliegende Arbeitskonzept erläutert: Die Hilfsstoffe lassen sich aufgrund ihrer Wasserlöslichkeit oder Wasseremulgierbarkeit, auf jeden Fall aber auch aufgrund ihrer Wasserquellbarkeit homogen in das aufzutrocknende Wirkstoffgemisch auf Aniontensidbasis einarbeiten. Wird in der nachfolgenden Trocknungsstufe im Sinne der Heißdampftrocknung aus den eingangs genannten und zur Vervollständigung der Erfindungsoffenbarung zitierten älteren Anmeldungen der Anmelderin das wasserhaltige Einsatzgut dann im überhitzten Wasserdampfstrom partikulär und insbesondere feinpartikulär zerteilt und unter der Einwirkung des Heißdampfes getrocknet, so ist die zuverlässige und gleichmäßige Einmischung dieser staubbindenden Hilfsmittel in jedem Partikel in gleichmäßiger Verteilung sichergestellt. Durch die flüssige, zähflüssige oder wenigstens klebrige Konsistenz des Hilfsstoffes tritt im schließlich aufgetrockneten Partikel die staubbindende Wirkung dieses Zusatzstoffes in den Vordergrund. Durch geeignete Mengenwahl im eingesetzten Wirkstoffgemisch kann andererseits wiederum sichergestellt werden, daß der angestrebte Zustand der verklebungsfreien Schüttbarkeit beziehungsweise Rieselfähigkeit auch für beliebig lange Lagerungszeiträume aufrechterhalten bleibt. Die im jeweiligen Einzelfall einzustellenden Mischungsverhältnisse werden durch einfache Versuche unter Berücksichtigung des hier betroffenen Fachwissens aufgefunden.

Beispielhaft seien im nachfolgenden charakteristische Vertreter für solche staubbindenden Hilfs- beziehungsweise Wertstoffe zur Abmischung mit den Aniontensidkomponenten aufgezählt:

Geeignete wasserlösliche und unter Normalbedingungen fließfähige Komponenten sind polyfunktionelle schwerflüchtige Alkohole beziehungsweise deren Oligomere, wobei hier schon aus Kostengründen dem Glycerin beziehungsweise entsprechenden Oligoglycerinen besondere Bedeutung zukommen kann. Weitere Beispiele für entsprechende fließfähige und/oder wenigstens unter Einwirkung von Restwasser hinreichende Klebrigkeit verleihende Verbindungen sind Mischungskomponenten wie Oligomere und/oder Polymere von Ethylenglykol und/oder Propylenglykol. Insbesondere Polyethylenglykole - beispielsweise eines Molgewichtsbereiches bis etwa 10.000, vorzugsweise bis etwa 7.000, können Wertstoffe im Sinne des erfindungsgemäßen Handelns sein, die - ebenso wie die zuvor erwähnten Vertreter Glycerin und/oder Oligoglycerine - nicht nur die gewünschte Staubbindung bewirken, sondern darüber hinaus Löslichkeitsvermittler und/oder Wertstoff im Rahmen der Wasch- und Reinigungsmittel sind. Typische Vertreter für geeignete Hilfsstoffe sind aber auch Mono- und/oder Oligoglycoside, wobei als Vertreter beispielhaft genannt seien, Glukose, Oligoglukosen, Zucker wie Succrose oder entsprechende höhere Ringzahlen umfassende Zucker, beziehungsweise Zuckerverbindungen, bis hin zu entsprechenden Polymerverbindungen von der Art der Stärke und/oder partiell abgebauter Stärke und Stärkederivate. Alle Verbindungen dieser Art zeichnen sich bekanntlich insbesondere in Gegenwart geringer Wassermengen durch eine mehr oder weniger stark ausgeprägte Klebrigkeit aus, im praktischen Einsatz der Wasch- und Reinigungsmittel werden diese in geringsten Konzentrationen vorliegenden Komponenten unmittelbar von den wäßrigen Waschflotten aufgenommen und stören die angestrebten Wasch- beziehungsweise Reinigungsprozesse nicht.

Geeignete Mischungskomponeten für die zuverlässige Beseitigung des Staubproblems sind aber auch oligomere und/oder polymere Mischungskomponeten, die ihrerseits bevorzugt wenigstens wasserquellbar und/oder auch wasserlöslich sind. Auch hier kommt eine Vielzahl von Vertretern in Betracht, denen im Rahmen üblicher Wasch- und Reinigungsmittel wichtige Bedeutung zukommen kann. Als Beispiele seien benannt: Polyvinylpyrrolidon (PVP), Polyvinylalkohl (PVA), Polycarboxylatverbindungen, insbesondere synthetischen Ursprungs, die beispielsweise durch Polymerisation beziehungsweise Copolymerisation von (Meth)acrylsäure und Maleinsäure beziehungsweise Maleinsäureanhydrid erhalten werden können und als sogenannte Builder-Komponenten in heute üblichen Textilwaschmitteln eine beträchtliche Rolle spielen. Ein anderes wichtiges Beispiel für die Verbindungsklasse der zuletzt genannten Art sind Carboxylgruppen enthaltende Oligo- beziehungsweise Polyglycosen, wie sie durch gezielte Oxydation von Stärke unter Einführung der Carboxylgruppe in 6-Stellung am Glukosering erhältlich sind. Geeignet sind weiterhin entsprechende wasserlösliche und/oder wasserquellbare Cellulosederivate, wie Methylcellulose, Carboxymethylcellulose, Hydroxyalkylcellulosen, wie Hydroxyethylcellulose und dergleichen.

Diese bisher lediglich beispielhaft aufgezählten Vertreter können durch beliebige andere Mischungskomponenten mit den angegebenen Stoffeigenschaften - insbesondere hinreichende Wasserlöslichkeit beziehungsweise Wasserquellbarkeit, sowie hinreichende Nichtflüchtigkeit unter den Aufarbeitungsbedingungen im überhitzten Wasserdampfstrom - ergänzt und/oder ersetzt werden. Auch hier gilt das einschlägige allgemeine Fachwissen.

Auf eine bestimmte weitere Klasse von Hilfsstoffen sei in diesem Zusammenhang getrennt eingegangen: Als Mischungskomponenten können insbesondere auch unter Normaltemperaturbedingungen fließfähige beziehungsweise hinreichend klebrige niotensidische Komponenten in Betracht kommen, die den zuvor bereits geschilderten Niotensiden auf Basis der Glycosidether beziehungsweise -ester nicht zuzuordnen sind. Lediglich beispielhaft sei auf die Klasse der Fettalkoholethoxylate mit beispielsweise 2 bis 40 E0-Einheiten, insbesondere 2 bis 20 E0-Einheiten im Molekül beziehungsweise auf entsprechende Ethoxylate von Fettsäuren, Fettaminen, Carbonsäureamide und/oder Alkansulfonamiden verwiesen. Die spezielle Lehre der eingangs genannten DE-40 30 688 der Anmelderin benennt im Zusammenhang mit dem dort offenbarten Trocknungsverfahren unter der Einwirkung von überhitztem Wasserdampf zahlreiche wichtige Unterklassen und spezielle Typen als Beispiele für solche niotensidischen Komponenten. Die Lehre der vorliegenden Erfindung geht unter anderem über die Offenbarung der älteren Anmeldung insoweit hinaus, als es erfindungsgemäß jetzt darauf abgestellt wird, geeignete niotensidischen Komponenten mit hinreichender Fließfähigkeit beziehungsweise Klebrigkeit in Gegenwart von Restwasser zur sicheren Bindung von unerwünschten Staubanteilen im Fertigprodukt einzusetzen, gleichzeitig aber die bisher im Feinstpulvertrockenzustand nur als äußerst staubende Wirkstoffzubereitungen zugänglichen Aniontenside in hohen Feststoffkonzentrationen zur Verfügung stellen zu können.

Besonders wichtige Aniontensidverbindungen für die Lehre der Erfindung sind Fettalkoholsulfate, Fettalkoholethersulfate, Olefin-und/oder Alkansulfonate, Fettsäureestersulfonate, sulfierte Fettsäuretriglyceride und/oder Glycerinfettsäure-Partialester-Sulfate. Ein anderes wichtiges Beispiel für Aniontenside im Sinne des erfindungsgemäßen Handelns sind Bernsteinsäurehalbestersulfonate, die in ihrer Estergruppierung einen hinreichend oleophilen Rest - beispielsweise einen Fettalkoholrest mit 6 bis 20 C-Atomen, insbesondere 10 bis 16 C-Atomen - aufweisen. Besonders wichtige Vertreter der Fettsäureestersulfonate sind die bekannten Aniontenside auf Basis von alpha-Sulfofettsäure-niedrigalkyl-estern beziehungsweise ihre Salze, wobei hier wiederum die wichtigsten Vertreter die alpha-Sulfofett-säuremethylester (MES) sind. Charakterische Vertreter für Fettsäuresulfonate sind alpha-Sulfofettsäuren beziehungsweise ihre wasch- beziehungsweise reinigungsaktiven Salze, die in der Fachwelt als "Di-Salze" bekannt sind und aus freien Fettsäuren und/oder aus entsprechenden alpha-Sulfofettsäureestern durch Esterspaltung zugänglich sind. Sulfierte Fettsäuretriglyceride sind bekanntlich Umsetzungsprodukte natürlicher Fette und/ oder Öle mit insbesondere SO₃, die als mehrkomponentige Wirkstoffmischungen aus Sulfaten und Sulfonaten anfallen und beispielsweise beschrieben sind in den Schutzrechtsanmeldungen der Anmelderin DE 39 36 001 und 39 41 365.

Die wasch- und/oder reinigungsaktiven Aniontenside liegen üblicherweise in Form ihrer Alkali- und/oder Amoniumsalze beziehungsweise als lösliche Salze organischer Basen vor. Besonders wichtige Alkalisalze sind bekanntlich die Natriumsalze und die entsprechenden Kaliumsalze.

Die Lehre der Erfindung umfaßt die Abmischung der Aniontensidverbindungen und ihre Abmischungen mit den bisher aufgezählten Mischungskomponenten insbesondere organischer Natur, auch in Abmischung mit anorganischen Mischungsbestandteilen. Hierbei kann es sich bevorzugt um entsprechende Komponenten aus dem Bereich üblicher Bestandteile von Wasch- und/oder Reinigungsmitteln handeln, die zweckmäßigerweise ebenfalls homogen in die Pulver und/oder Granulate eingearbeitet sind. Als Beispiele für solche wasserlöslichen anorganischen Mischungskomponenten seien wasserlösliche Salze wie Natriumcarbonat, Natriumbicarbonat und/oder Natriumsulfat aber auch wasserlösliche Natriumsilikate, insbesondere die für Wasch- und Reinigungsmittel typischen Wassergläser benannt. Neben oder anstelle solcher wasserlöslicher anorganischer Komponenten können wasserunlösliche Mischungskomponenten in die pulverförmigen AniontensidAgglomerate eingearbeitet sein. Als Beispiel seien hier benannt: Synthetische Zeolithverbindungen insbesondere Zeolith-NaA in Waschmittelqualität und einem Calciumbindevermögen im Bereich von 100 bis 200 mg CaO/g - vergleiche hierzu die Angaben der DE 24 12 837. Die Besonderheit für erfindungsgemäß ausgestaltete Aniontensid-Konzentrate wird gerade aus der Mitverwendung solcher unlöslicher anorganischer Bestandteile ersichtlich: Wird beispielsweise TAS zusammen mit Zeolith-NaA einem konventionellen Sprühtrocknungsverfahren unterworfen, so zieht die waschaktive TAS-Komponente derart fest und in so dünner Schicht auf die Zeolithteilchen auf, daß im nachfolgenden Einsatz substantielle Anteile der Waschkraft sich nicht mehr in der wäßrigen Flotte ausbilden können. In den erfindungsgemäß definierten und im Rahmen der erfindungsgemäßen Lehre hergestellten Aniontensid-Konzentraten ist diese Negativwirkung des Zeolithzusatzes nicht oder zumindestens in einem sehr stark verminderten Ausmaß gegeben. Weitere Beispiele für wasserunlösliche mögliche Mischkomponenten sind feinteilige quellfähige Schichtsilikate von der Art entsprechender Montmorilonite, beispielsweise Bentonit.

Zu den möglichen Ausführungsformen des Heißdampf-Trocknungsverfahrens wird auf die genannten älteren Anmeldungen und insbesondere auf die Anmeldungen gemäß deutscher Patentanmeldungen P 42 04 035.3 und P 42 04 090.6 verwiesen. Zur Vervollständigung der Erfindungsoffenbarung auch im Rahmen der vorliegenden Anmeldung sei hier lediglich auf eine Auswahl besonders wichtiger Verfahrensparameter eingegangen:

Die Arbeitsbedingungen des erfindungsgemäßen Verfahrens ermöglichen den Einsatz hoher Temperaturen der im Kreislauf geführten Wasserdampfphase im Bereich des Trocknungsschrittes der Sprühtrocknung. In der Regel liegen die Arbeitstemperaturen des Einsatz-Dampfes oberhalb 150°C und vorzugsweise bei wenigstens etwa 200°C in der Gasphase. Dabei können Arbeitstemperaturen von 250°C und darüber besonders interessant sein, wobei insbesondere auch der Temperaturbereich von wenigstens 300°C, insbesondere 300 - 380°C in Betracht kommt. Für viele Fälle sind Arbeitstemperaturen im Bereich von etwa 270 - 350°C in der Wasserdampfphase besonders geeignet. Dabei beziehen sich alle diese Temperaturangaben jeweils auf die Temperatur des der Sprühzone im Gleich- oder Gegenstrom zugeführten auf Optimal-Temperatur aufgeheizten Wasserdampfstromes. In an sich bekannter Weise sinkt im Verlaufe des Verweilens mit dem nassen beziehungsweise feuchten Gut die Temperatur des Wasserdampfes. Weitgehend energetische Überlegungen - insbesondere auch zu der beabsichtigten Weiterverwendung des auszukreisenden Dampfteilstromes - bestimmen die Mengenverhältnisse zwischen der zu verdampfenden flüssigen Wassermenge und der zugeführten Menge des überhitzten Wasserdampfes. Möglich sind hier Ausführungsformen, die nur eine beschränkte Absenkung der Dampftemperatur nach Verlassen der Sprühzone beispielsweise auf Werte im Bereich von etwa 190 - 250°C beinhalten, während in anderen Ausführungsformen eine weiterführende Ausnutzung der thermischen Energie des Wasserdampfes bis zu einer Absenkung der Dampftemperatur in die Nähe der Kondensationstemperatur unter Verfahrensbedingungen - 100 - 110°C - zweckmäßig beziehungsweise vorteilhaft sein kann. Im einzelnen werden diese Detailfragen durch die Ausgestaltung des Kreislaufverfahrens in seiner Gesamtheit mitbestimmt. Entsprechende Überlegungen gelten für den Einsatz von überhitztem Wasserdampf als Heißgas in einer gegebenenfalls vorgesehenen Nachbehandlungsstufe, zum Beispiel im Wirbelschichtverfahren oder einem anderen, gegebenenfalls integrierten Agglomerationstyp. Auch die zuvor angegebenen Zahlenwerte gelten hier sinngemäß.

### Beispiele

### Beispiel 1

Die Sprühneutralisation wurde in einem mit einem Reaktionsrohr gekoppelten Versuchssprühturm der Firma Niro-Atomizer vom Typ "Minor Production" durchgeführt.

Im einem horizontal angeordneten Reaktionsrohr (Länge 100 cm, Durchmesser 10 cm) mit Stator/Rotor-Mischer wurde zunächst eine C_{16/18}-alpha-Sulfotalgfettsäure mit einem Sulfiergrad von 89,6 % mit einer wäßrigen 25 gew.-%igen Natriumhydroxidlösung in Kontakt gebracht, wobei das molare Verhältnis Sulfosäure : NaOH bezogen auf die Festsubstanzen 1 : 2,2 betrug. Die Komponenten wurden bei Raumtemperatur am Kopf des Reaktors über eine Mehrstoffmischdüse aufgegeben und unter intensiver Durchmischung neutralisiert.

Der Ablaß des Reaktionsrohrs war mit dem Versuchssprühturm gekoppelt, so daß der intermediär gebildete, gering viskose Slurry des Sulfofettsäure-Natriumsalzes (Trockensubstanzgehalt : ca. 37 Gew.-%) im Anschluß an die Neutralisation in Anwesenheit von überhitztem Wasserdampf zu einem Tensidpulver mit dem Schüttgewicht 370 g/l umgewandelt wurde.

Es wurden die folgenden Betriebsparameter eingestellt:

| | |
|---|---|
| Drehzahl des Rotationszerstäubers : | 25.000 UpM |
| Dampftemperatur, Eintritt : | ca. 300 °C |
| Dampftemperatur, Austritt : | ca. 200 °C |
| Turmunterdruck : | 16 mbar |
| Feedtemperatur : | 80 °C |
| Feedmenge : | 8 bis 18kg/h |
| Dampfmenge : | 500 m³/h |

Das Produkt hatte einen Trockensubstanzgehalt von 99,8 Gew.-% und ein Schüttgewicht von 370 g/l. Es zeigte sehr günstige Auflöseerscheinungen bei Zugabe von Wasser.

### Beispiel 2

Beispiel 1 wurde unter Einsatz eines sauren Halbesters der Schwefelsäure mit C_{16/18}-Talgalkohol und einer wäßrigen 25 gew.- %igen Kaliumhydroxidlösung wiederholt, wobei das molare Verhältnis von saurem Ester : KOH während der Neutralisation - bezogen auf die Feststoffe - 1 : 1,1 betrug. Das Produkt wies einen Trockensubstanzgehalt von 99 Gew.-% auf; das Schüttgewicht betrug 290 g/l.

### Beispiel 3

Beispiel 1 wurde unter Einsatz eines alpha-C_{16/18}-alpha-Sulfofettsäuremethylesters und einer wäßrigen 25 gew.-%igen Natriumhydroxid- lösung wiederholt, wobei das molare Verhältnis von saurem Ester : KOH während der Neutralisation - bezogen auf die Feststoffe - 1 : 1,25 betrug. Das Produkt wies einen Trockensubstanzgehalt von 98 Gew.-% auf; das Schüttgewicht betrug 295 g/l.

## Patentansprüche

1. Verfahren zur Herstellung netz-, wasch- und/oder reinigungsaktiver Aniontensid-Salze durch Umsetzung anorganischer und/oder organischer Basen mit den zugehörigen Aniontensid-Vorstufen, die hydrophile negativ geladene Gruppen an hydrophobe Kohlenwasserstoffreste gebunden enthalten, im Rahmen einer Sprühneutralisation, bei der die Aniontensid-Vorstufen in einer versprühbaren Zubereitungsform feinteilig in eine Gasphase versprüht, dabei mit den Basen zur Umsetzung gebracht und bevorzugt wenigstens anteilig getrocknet werden, dadurch gekennzeichnet, daß die Sprühneutralisation in überhitztem Wasserdampf als Schutzgasphase durchgeführt wird.

2. Verfahren nach Anspruch 1, dadurch gekennzeichnet, daß grenzflächenaktive Aniontensid-Salze gebildet werden, die Carboxylat-, Sulfat-, Sulfonat-, Phosphat- und/oder PhosphonatReste als anionischen Bestandteil zusammen mit Kationen aus der Gruppe der Alkalimetalle, Erdalkalimetalle, Ammoniak und/ oder organischen Ammoniumverbindungen enthalten.

3. Verfahren nach Ansprüchen 1 und 2, dadurch gekennzeichnet, daß wasserlösliche und/oder wasserdispergierbare Aniontensid-Salze gebildet werden, deren hydrophobe Kohlenwasserstoffreste, bevorzugt 6 bis 30, zweckmäßig 8 bis 20 und insbesondere 10 bis 18 C-Atome, enthalten, als Kationen weiterhin bevorzugt Natrium, Kalium, Ammonium und/oder organisch substituiertes Ammonium aufweisen und weiterhin bevorzugt den Stoffklassen der Carboxylate, Sulfonate und/oder Sulfate zugehören.

4. Verfahren nach Ansprüchen 1 bis 3, dadurch gekennzeichnet, daß die Salz-bildenden Aniontensid-Vorstufen als fließfähige und versprühbare Lösungen, Emulsionen und/oder Suspensionen, bevorzugt in entsprechender wäßriger Zubereitungsform, in die Sprühneutralisationsstufe eingebracht werden.

5. Verfahren nach Ansprüchen 1 bis 4, dadurch gekennzeichnet, daß auch die anorganischen und/oder organischen Basen in fließfähiger, insbesondere wäßriger Zubereitungsform, eingesetzt werden.

6. Verfahren nach Ansprüchen 1 bis 5, dadurch gekennzeichnet, daß die gebildeten oberflächenaktiven Aniontensid-Salze mittels des überhitzen Wasserdampfes zu schütt- und rieselfähigen Trockenprodukten, insbesondere entsprechenden Pulvern und/oder Granulaten, aufbereitet werden.

7. Verfahren nach Ansprüchen 1 bis 6, dadurch gekennzeichnet, daß als wasch- und/oder reinigungsaktive Aniontensidverbindungen entsprechende Fettalkoholsulfate (FAS), Fettalkoholethersulfate (FAES), Olefin-und/oder Alkansulfonate, Fettsäureestersulfonate, insbesondere alpha-Sulfofettsäure-niedrig-alkylester beziehungsweise ihre Salze, Fettsäuresulfonate, insbesondere Salze der alpha-Sulfofettsäuren (Di-Salze), BernsteinsäureHalbester-sulfonate, Salze sulfierter Fettsäuretriglyceride und/oder Glycerin/Fettsäure-Partialestersulfate, hergestellt werden.

8. Verfahren nach Ansprüchen 1 bis 7, dadurch gekennzeichnet, daß durch Sprühneutralisation und gleichzeitige beziehungsweise nachfolgende Trocknung mit dem überhitztem Heißdampfstrom -gewünschtenfalls unter gleichzeitiger und/oder nachfolgender Granulatbildung - schütt- und rieselfähige Produkte mit Schüttdichten von wenigstens etwa 150 g/l, vorzugsweise oberhalb etwa 200 g/l und insbesondere oberhalb etwa 300 g/l, hergestellt werden.

9. Verfahren nach Ansprüchen 1 bis 8, dadurch gekennzeichnet, daß durch Mitverwendung von staubbindenden Hilfs- und/oder Wertstoffen und/oder mittels Regulierung des Restwassergehaltes ein im wesentlichen staubfreies schütt- und rieselfähiges Gut ausgebildet wird.

10. Verfahren nach Ansprüchen 1 bis 9, dadurch gekennzeichnet, daß in einem Mehrstufenverfahren zunächst die Sprühneutralisation und wenigstens weitgehende Sprühtrocknung zu einem rieselfähigen Pulver vorgenommen und dieses Pulver nachfolgend zu Agglomeraten größeren Teilchendurchmessers agglomeriert wird, wobei diese Agglomeration vorzugsweise ebenfalls unter Einsatz einer Heißgasphase auf Basis des überhitzten Wasserdampfes durchgeführt wird und mit der vorgängigen Sprühneutralisation und -trocknung zum integrierten Mehrstufenverfahren verbunden sein kann.

11. Verfahren nach Ansprüchen 1 bis 10, dadurch gekennzeichnet, daß Pulver und/oder Agglomerate hergestellt werden, deren Gehalt an wasch- und/ oder reinigungsaktiven Aniontensid-Salzen wenigstens etwa 20 Gew.-%, vorzugsweise wenigstens etwa 30 Gew.-%, beträgt und insbesondere im Bereich von etwa 35 bis 95 Gew.-% liegt, wobei in besonders bevorzugten Ausführungsformen der Gehalt an Aniontensid-Salzen mehr als 50 Gew.-% - Gew.-% bezogen jeweils auf feinkörniges Feststoffgut - ausmacht.

12. Verfahren nach Ansprüchen 1 bis 11, dadurch gekennzeichnet, daß als staubbindende Hilfs- und/oder Wertstoffe Mischungskomponenten in bevorzugt homogener Abmischung eingesetzt werden, die als solche bei Raumtemperatur - gegebenenfalls in Gegenwart beschränkter Restwassermengen - flüssige und/oder wenigstens klebrige Beschaffenheit besitzen und dabei bevorzugt in solchen Mengen in das Aniontensid-Konzentrat eingearbeitet sind, daß die geforderte Staubfreiheit gewährleistet ist, ohne die Schütt- und Rieselfähigkeit nachhaltig zu behindern.

13. Verfahren nach Ansprüchen 1 bis 12, dadurch gekennzeichnet, daß als staubbindende Hilfsstoffe bei Raumtemperatur wasserlösliche, wasseremulgierbare und/oder wasserquellbare monomere, oligomere und/oder polymere Mischungskomponenten wie Glycerin, Oligoglycerine, Polyethylenglykole und/oder Polypropylenglykole, Mono- und/oder Oligoglykoside beziehungsweise entsprechende Glykosidverbindungen, hier insbesondere wasch- und/oder reinigungsaktive Alkylglykosidverbindungen, wasserquellbare und/oder wasserlösliche Oligomer- und/oder Polymerverbindungen, wie Polyvinylpyrolidon (PVP), Polyvinylalkohol (PVA), Polycarboxylate beziehungsweise Cellulosederivate wie Methylcellulose, Carboxymethylcellulose, Hydroxyalkylcellulose, aber auch weitere bei Raumtemperatur und/oder in Gegenwart von Restwasser fließfähige beziehungsweise klebrige Komponenten mit Tensidcharakter, insbesondere entsprechende Niotenside, eingesetzt werden.

14. Verfahren nach Ansprüchen 1 bis 13, dadurch gekennzeichnet, daß im Rahmen der Sprühneutralisation wenigstens zwei unterschiedliche Aniontensid-Typen, zum Beispiel FAS und Di-Salze oder MES und Di-Salze, in bevorzugt homogener Abmischung miteinander ausgebildet werden.

15. Verfahren nach Ansprüchen 1 bis 14, dadurch gekennzeichnet, daß feinteilige Aniontensid-Konzentrate ausgebildet werden, die neben den Tensiden und gegebenenfalls vorliegenden organischen Mischungskomponenten anorganische Mischungsbestandteile, bevorzugt aus dem Bereich üblicher Bestandteile von Wasch- und/oder Reinigungsmitteln - weiterhin bevorzugt ebenfalls homogen in die Pulver- und/oder Granulate eingearbeitet - enthalten.

16. Verfahren nach Ansprüchen 1 bis 15, dadurch gekennzeichnet, daß wasserlösliche anorganische Komponenten wie Natriumcarbonat, Natriumsulfat und/oder Wasserglas in die Aniontensid-Konzentrate eingearbeitet werden.

17. Abänderung des Verfahrens zur Herstellung netz-, wasch- und/oder reinigungsaktiver Aniontensid-Salze durch Umsetzung anorganischer und/ oder organischer Basen mit den zugehörigen Aniontensid-Vorstufen nach Ansprüchen 1 bis 16, dadurch gekennzeichnet, daß die Umsetzung der anorganischen und/oder organischen Basen mit den Aniontensid-Vorstufen in Abwesenheit des überhitzten Wasserdampfes und dabei bevorzugt in einer insbesondere wäßrigen Flüssigphase vorgenommen und das Reaktionsgemisch unter Ausnutzung der Neutralisationswärme nachfolgend der Trocknung mit überhitztem Wasserdampf zugeführt wird.

18. Verwendung von überhitztem Wasserdampf als Schutzgas und gleichzeitig als wasserabführendes Trocknungsgas bei der Herstellung netz-, wasch-und/oder reinigungsaktiver Aniontensid-Salze durch Umsetzung anorganischer und/oder organischer Basen mit den zugehörigen Aniontensid-Vorstufen, die hydrophile negativ-geladene Gruppen an hydrophobe Kohlenwasserstoffreste gebunden enthalten, im Rahmen einer Sprühneutralisation, bei der die Aniontensid-Vorstufen in einer versprühbaren Zubereitungsform feinteilig in eine Gasphase versprüht, dabei mit den Basen zur Umsetzung gebracht und bevorzugt wenigstens anteilig getrocknet werden.

19. Ausführungsform nach Anspruch 18, dadurch gekennzeichnet, daß die Sprühneutralisation in einem Kreislaufdampfstrom durchgeführt wird, dessen Temperatur im Bereich von etwa 100 bis 450°C, vorzugsweise von etwa 115 bis 350°C, gehalten wird.

## Claims

1. A process for the production of wetting-, washing-and/or cleaning-active anionic surfactant salts by reaction of inorganic and/or organic bases with the associated anionic surfactant intermediates, which contain hydrophilic negatively charged groups attached to hydrophobic hydrocarbon radicals, in the course of spray neutralization, in which the anionic surfactant intermediates in the form of a sprayable formulation are finely sprayed into a gas phase and, at the same time, reacted with the bases and, preferably, at least partly dried, characterized in that the spray neutralization is carried out in superheated steam as the inert gas phase.

2. A process as claimed in claim 1, characterized in that the interfacially active anionic surfactant salts formed contain carboxylate, sulfate, sulfonate, phosphate and/or phosphonate residues as anionic constituents together with cations from the group of alkali metals, alkaline earth metals, ammonia and/or organic ammonium compounds.

3. A process as claimed in claims 1 and 2, characterized in that water-soluble and/or water-dispersible anionic surfactant salts are formed of which the hydrophobic hydrocarbon radicals preferably contain 6 to 30, more preferably 8 to 20 and, most preferably, 10 to 18 carbon atoms, which preferably contain sodium, potassium, ammonium and/or organically substituted ammonium as cations and which preferably belong to the classes of carboxylates, sulfonates and/or sulfate.

4. A process as claimed in claims 1 to 3, characterized in that the salt-forming anionic surfactant intermediates are introduced into the spray neutralization stage in the form of free-flowing and sprayable solutions, emulsions and/or suspensions, preferably in the form of corresponding aqueous preparations.

5. A process as claimed in claims 1 to 4, characterized in that the inorganic and/or organic bases are also used in the form of free-flowing preparations, particularly aqueous preparations.

6. A process as claimed in claims 1 to 5, characterized in that the surface-active anionic surfactant salts formed are converted by the superheated steam into pourable and free-flowing dry products, more particularly corresponding powders and/or granules.

7. A process as claimed in claims 1 to 6, characterized in that the washing- and/or cleaning-active anionic surfactant compounds produced are corresponding fatty alcohol sulfates (FAS), fatty alcohol ether sulfates (FAES), olefin and/or alkane sulfonates, fatty acid ester sulfonates, more particularly α-sulfonated fatty acid lower alkyl esters and salts thereof, fatty acid sulfonates, more particularly salts of α-sulfofatty acids (disalts), succinic acid semi-ester sulfonates, salts of sulfonated fatty acid triglycerides and/or glycerol/fatty acid partial ester sulfates.

8. A process as claimed in claims 1 to 7, characterized in that pourable and free-flowing products having apparent densities of at least about 150 g/l, preferably above about 200 g/l and, more preferably, above about 300 g/l are produced by spray neutralization and simultaneous or subsequent drying with the superheated steam, if desired with simultaneous and/or subsequent granulation.

9. A process as claimed in claims 1 to 8, characterized in that a substantially dust-free pourable and free-flowing material is formed through the presence of dust-binding auxiliaries and/or useful materials and/or by regulation of the residual water content.

10. A process as claimed in claims 1 to 9, characterized in that, in a multistage process, spray neutralization and at least substantial spray drying to form a free-flowing powder are carried out in a first step and the powder thus formed is subsequently agglomerated into agglomerates of relatively large particle diameter, the agglomeration step also preferably being carried out using a hot gas phase based on superheated steam and optionally being combined with the preceding spray neutralization and drying step to form the integrated multistage process.

11. A process as claimed in claims 1 to 10, characterized in that the powders and/or agglomerates produced have a content of washing- and/or cleaning-active anionic surfactant salts of at least about 20% by weight, preferably at least about 30% by weight and, more preferably, of the order of 35 to 95% by weight, the content of anionic surfactant salts in particularly preferred embodiments being more than 50% by weight (based on fine-particle solids).

12. A process as claimed in claims 1 to 11, characterized in that the dust-binding auxiliaries and/or useful materials used are mixture components - preferably in the form of homogeneous mixtures - which are liquid and/or at least tacky as such at room temperature, optionally in the presence of limited quantities of residual water, and which are preferably incorporated in the anionic surfactant concentrate in such quantities that the required absence of dust is guaranteed without any lasting adverse effect on pourability and free flow.

13. A process as claimed in claims 1 to 12, characterized in that the dust-binding auxiliaries used are monomeric, oligomeric and/or polymeric mixture components soluble, emulsifiable and/or swellable in water at room temperature, such as glycerol, oligoglycerols, polyethylene glycols and/or polypropylene glycols, mono- and/or oligoglycosides or corresponding glycoside compounds, more particularly washing- and/or cleaning-active alkyl glycoside compounds, water-swellable and/or water-soluble oligomer and/or polymer compounds, such as polyvinyl pyrrolidone (PVP), polyvinyl alcohol (PVA), polycarboxylates, and cellulose derivatives, such as methyl cellulose, carboxymethyl cellulose, hydroxyalkyl cellulose, and other surfactant components, more particularly corresponding nonionic surfactants, which are fluid or tacky at room temperature and/or in the presence of residual water.

14. A process as claimed in claims 1 to 13, characterized in that at least two different types of anionic surfactants, for example FAS and disalts or MES and disalts, are formed during the spray neutralization step, preferably in the form of a homogeneous mixture with one another.

15. A process as claimed in claims 1 to 14, characterized in that fine-particle anionic surfactant concentrates are formed which, in addition to the surfactants and any organic mixture components present, contain inorganic mixture constituents, preferably selected from typical ingredients of detergents and/or cleaning products, which again are preferably incorporated homogeneously in the powders and/or granules.

16. A process as claimed in claims 1 to 15, characterized in that water-soluble inorganic components, such as sodium carbonate, sodium sulfate and/or waterglass, are incorporated in the anionic surfactant concentrates.

17. A modification of the process for the production of wetting-, washing- and/or cleaning-active anionic surfactant salts by reaction of inorganic and/or organic bases with the associated anionic surfactant intermediates claimed in claims 1 to 16, characterized in that the reaction of the inorganic and/or organic bases with the anionic intermediates is carried out in the absence of superheated steam, preferably in a liquid phase, more particularly an aqueous phase, and the reaction mixture is subsequently dried with superheated steam utilizing the heat of neutralization.

18. The use of superheated steam as inert gas and, at the same time, as a water-removing drying gas in the production of wetting-, washing- and/or cleaning-active anionic surfactant salts by reaction of inorganic and/or organic bases with the associated anionic surfactant intermediates containing hydrophilic negatively charged groups attached to hydrophobic hydrocarbon radicals in the course of spray neutralization, in which the anionic surfactant intermediates are finely sprayed in a sprayable form into a gas phase and, at the same time, reacted with the bases and, preferably, at least partly dried.

19. The use claimed in claim 18, characterized in that the spray neutralization is carried out in circulating steam having a temperature in the range from about 100 to 450°C and preferably in the range from about 115 to 350°C.

## Revendications

1. Procédé de production de sels d'agents tensioactifs anioniques actifs comme agents de mouillage, de lavage et/ou de nettoyage, par mise en réaction de bases minérales et/ou organiques avec les stades préliminaires d'agent tensioactif anionique correspondants, qui contient des groupes hydrophiles chargés négativement, liés aux radicaux hydrocarbonés hydrophobes, dans le cadre d'une neutralisation par pulvérisation, dans laquelle les stades préliminaires d'agent tensioactif anionique sont pulvérisés sous une forme de préparation pulvérisable, finement divisés dans une phase gazeuse, sont amenés de cette façon à réaction avec les bases, et de préférence sont séchés au moins partiellement, caractérisé en ce que la neutralisation par pulvérisation est effectuée dans la vapeur surchauffée en tant que phase gazeuse protectrice.

2. Procédé selon la revendication 1, caractérisé en ce que l'on forme des sels d'agents tensioactifs anioniques actifs sur les surfaces de contact qui renferment des radicaux carboxylate, sulfate, sulfonate, phosphate et/ou phosphonate en tant que constituant anionique conjointement avec des cations choisis dans le groupe des métaux alcalins, des métaux alcalino-terreux, de l'ammoniac et/ou des dérivés d'ammonium organiques.

3. Procédé selon les revendications 1 et 2, caractérisé en ce que l'on forme des sels d'agent tensioactif solubles dans l'eau et/ou dispersibles dans l'eau dont les radicaux hydrocarbonés hydrophobes renferment de préférence de 6 à 30, d'une manière appropriée de 8 à 20 et en particulier de 10 à 18 atomes de carbone, possèdent en outre comme cations de préférence le sodium, le potassium, l'ammonium et/ou l'ammonium substitué organiquement et en outre de préférence sont attribués aux classes de substances des carboxylates, sulfonates et/ou sulfates.

4. Procédé selon les revendications 1 à 3, caractérisé en ce que les stades préliminaires d'agent tensioactif anionique formateurs de sels, sont introduits en tant que solutions, émulsions et/ou suspension aptes à l'écoulement et pulvérisables de préférence sous une forme de préparations aqueuses correspondante, dans l'étape de neutralisation par pulvérisation.

5. Procédé selon les revendications 1 à 4, caractérisé en ce que l'on met en oeuvre aussi les bases minérales et/ou organiques sous une forme de préparation apte à l'écoulement, en particulier aqueuse.

6. Procédé selon les revendications 1 à 5, caractérisé en ce que les sels d'agents tensioactifs anioniques, actifs en surface, formés, sont préparés à l'aide de la vapeur surchauffée en produits secs aptes à la décharge et au ruissellement, en particulier en poudres et/ou granulés correspondants.

7. Procédé selon les revendications 1 à 6, caractérisé en ce que comme dérivés tensioactifs anioniques actifs comme agents de lavage et/ou de nettoyage, on produit des sulfates d'alcool gras (FAS), des sulfates d'éther d'alcool gras (FAES), des oléfines et/ou alcanes sulfonates, des sulfonates d'ester d'acide gras correspondants, en particulier des esters d'alcoyle inférieur d'acide gras alpha-sulfoné, ou leurs sels, des sulfonates d'acide gras, en particulier des sels des acides gras alpha-sulfonés (di-sels), des hemi-esters d'acide succinique sulfonés, des sels des triglycérides d'acide gras sulfatés, et/ou des sulfates d'esters partiels de glycérol et d'acide gras.

8. Procédé selon les revendications 1 à 7, caractérisé en ce que par neutralisation par pulvérisation et séchage simultané ou subséquent avec le courant de vapeur surchauffée, si désiré avec formation de granulés simultanée et/ou subséquente, on prépare des produits aptes à la décharge et aptes au ruissellement ayant des densités apparentes d'au moins environ 150 g/l, de préférence au-dessus d'environ 200 g/l et en particulier au-dessus d'environ 300 g/l.

9. Procédé selon les revendications 1 à 8, caractérisé en ce que par utilisation conjointe de substances auxiliaires et/ou de substances valables qui lient la poussière et/ou à l'aide d'une régulation de la teneur en eau résiduelle, on forme un produit essentiellement dépourvu de poussière apte à la décharge et au ruissellement.

10. Procédé selon les revendications 1 à 9, caractérisé en ce que dans un procédé à plusieurs étapes on effectue en premier lieu la neutralisation par pulvérisation et le séchage par pulvérisation au moins extensif en une poudre apte au ruissellement et en ce que l'on agglomère cette poudre ultérieurement en agglomérats de plus grand diamètre de particules, cette agglomération étant effectuée de préférence également en utilisant une phase de gaz chauds à base de vapeur d'eau surchauffée et pouvant être reliée à la neutralisation et au séchage par pulvérisation précédents, en vue du procédé intégré à plusieurs étapes.

11. Procédé selon les revendications 1 à 10, caractérisé en ce que l'on prépare des poudres et/ou des agglomérats dont la teneur en sels d'agents tensioactifs anioniques actifs comme agent de lavage et/ou de nettoyage s'élève à environ 20 % en poids au moins, de préférence au moins à environ 30 % en poids, et en particulier se situe dans la zone d'environ 35 à 95 % en poids tandis que dans des modes d'exécution particulièrement préférés la teneur en sels d'agents tensioactifs anioniques représente plus de 50 % en poids, les % en poids rapportés respectivement au produit solide en grains fins.

12. Procédé selon les revendications 1 à 11, caractérisé en ce que comme substances auxiliaires et/ou valables qui lient la poussière, on met en oeuvre des composants de mélange en mélange de préférence homogène, qui possèdent en tant que tels à température ambiante, le cas échéant en présence de quantités limitées d'eau résiduelle, une nature liquide et/ou au moins gommeuse et ainsi sont incorporés de préférence dans de telles quantités dans le concentré d'agent tensioactif anionique, et en ce que l'absence de poussière requise est garantie, sans empêcher d'une manière durable l'aptitude à la décharge et au ruissellement.

13. Procédé selon les revendications 1 à 12, caractérisé en ce que comme substance auxiliaire qui lie la poussière, on met en oeuvre des composants de mélange monomériques, oligomériques et/ou polymériques, solubles dans l'eau, emulsifiables dans l'eau et/ou aptes à gonfler dans l'eau, à température ambiante, comme le glycérol, les oligoglycérols, les polyéthylèneglycols, et/ou les polypropylèneglycols, les mono- et/ou les oligoglycosides ou les dérivés de glycoside correspondants, ici en particulier des dérivés d'alcoylglycosides actifs comme produits de lavage et/ou de nettoyage, des dérivés oligomériques et/ou polymériques qui gonflent dans l'eau et/ou solubles dans l'eau comme la polyvinylpyrrolidone (PVP) l'alcool polyvinylique (PVA), les polycarboxylates ou les dérivés de la cellulose comme la méthylcellulose, la carboxyméthylcellulose, la hydroxyalcoylcellulose, mais aussi d'autres composants aptes à l'écoulement ou gomme à température ambiante et/ou en présence d'eau résiduelle, ayant un caractère d'agent tensioactif, en particulier d'agents tensioactifs non ioniques correspondants.

14. Procédé selon les revendications 1 à 13, caractérisé en ce que dans le cadre de la neutralisation par pulvérisation on forme au moins deux types différents d'agents tensioactifs anioniques par exemple FAS et des di-sels ou MES et des di-sels, en mélange l'un avec l'autre, de préférence homogène.

15. Procédé selon les revendications 1 à 14, caractérisé en ce que des concentrés finement divisés d'agents tensioactifs anioniques sont formés, qui renferment à côté des agents tensioactifs et le cas échéant des composants de mélange organiques présents, des constituants de mélange minéraux incorporés de préférence à partir du domaine des constituants usuels des produits de lavage et/ou de nettoyage, en outre également de préférence d'une manière homogène dans les poudres et/ou granulés.

16. Procédé selon les revendications 1 à 15, caractérisé en ce que l'on incorpore des composants minéraux solubles dans l'eau comme le carbonate de sodium, le sulfate de sodium et/ou le verre soluble dans les concentrés d'agent tensioactif anionique.

17. Modification du procédé d'obtention de sels d'agents tensioactifs anioniques, actifs comme produit de mouillage, de lavage et/ou de nettoyage, par réaction de bases minérales et/ou organiques avec les stades préliminaires d'agents tensioactifs anioniques correspondants selon les revendications 1 à 16, caractérisée en ce que la réaction des bases minérales et/ou organiques avec les stades préliminaires d'agents tensioactifs anioniques est effectuée en l'absence de vapeur d'eau surchauffée et ainsi de préférence dans une phase liquide, en particulier aqueuse, et en ce que l'on amène en utilisant la chaleur de neutralisation, le mélange réactionnel consécutivement au séchage avec de la vapeur d'eau surchauffée.

18. Utilisation de la vapeur d'eau surchauffée comme gaz protecteur et en même temps comme gaz de séchage qui élimine l'eau, au cours de la production de sels d'agents tensioactifs anioniques actifs comme produit de mouillage, de lavage et/ou de nettoyage, par réaction de bases minérales et/ou organiques avec les stades préliminaires d'agents tensioactifs anioniques correspondants qui contiennent des groupes hydrophiles chargés négativement, liés à des radicaux hydrocarbonés hydrophobes dans le cadre d'une neutralisation par pulvérisation, dans laquelle les stades préliminaires d'agent tensioactif anionique sont pulvérisés sous une forme de préparation pulvérisable, de manière finement divisée, en une phase gazeuse, en outre sont amenés en réaction avec les bases et, de préférence au moins partiellement, sont séchés.

19. Mode d'exécution selon la revendication 18, caractérisé en ce que la neutralisation par pulvérisation est effectuée dans un courant de vapeur en circuit, dont la température est maintenue dans la plage allant d'environ 100 à 450°C, de préférence allant d'environ 115 à 350°C.
